# EUROPÄISCHE PATENTSCHRIFT

(11) **EP 3 507 233 B1**
(45) Veröffentlichungstag und Bekanntmachung des Hinweises auf die Patenterteilung: **28.06.2023**
(21) Anmeldenummer: 17743345.5
(22) Anmeldetag: 26.07.2017
(51) Int. Cl.: B66F 9/075

(54) **FLURFÖRDERZEUG UND ANTRIEBSRADLAGERVORRICHTUNG FÜR FLURFÖRDERZEUGE.**
INDUSTRIAL TRUCK, AND DRIVING WHEEL BEARING APPARATUS FOR INDUSTRIAL TRUCKS.
CHARIOT DE MANUTENTION ET DISPOSITIF PORTEUR DE ROUE MOTRICE POUR CHARIOTS DE MANUTENTION.

(30) Priorität: 02.09.2016 DE 102016116469; 15.02.2017 DE 102017103024
(43) Veröffentlichungstag der Anmeldung: 10.07.2019
(73) Patentinhaber: Hubtex Maschinenbau GmbH & Co. KG, 36041 Fulda (DE)
(72) Erfinder: KELLER, Jürgen, 36137 Großenlüder (DE)
(74) Vertreter: Kluin Patent
(86) Internationale Anmeldenummer: PCT/EP2017/068928
(87) Internationale Veröffentlichungsnummer: WO 2018/041484

(56) Entgegenhaltungen:
- WO-A1-89/00928
- WO-A1-2008/067926
- DE-A1- 3 934 385
- DE-A1- 19 604 226
- DE-T2- 69 620 789
- FR-A1- 2 239 357
- FR-A1- 2 677 306
- GB-A- 2 410 014
- US-A- 3 537 722
- US-A- 4 534 575
- US-A- 5 379 842
- US-B1- 7 861 820

## Beschreibung

Die Erfindung betrifft ein Flurförderzeug mit einem Chassis oder Fahrgestell, welches eine Ebene definiert, die auch als Grundebene bezeichnet wird und in einer Betriebsstellung des Flurförderzeugs etwa parallel zum Untergrund verläuft, und mit zumeist zwei jeweils zumindest ein Antriebsrad aufweisenden Antriebsradanordnungen. Ferner betrifft die Erfindung eine Antriebsradlagervorrichtung für ein Flurförderzeug.

Derartige Flurförderzeuge sind je nach Einsatzgebiet in einer Vielzahl von Ausgestaltungen bekannt. Oft dienen sie dem Anheben und Absenken von Waren beispielsweise zur Einlagerung in oder der Entnahme aus Regalsystemen, wozu sie dann regelmäßig einen sich etwa vertikal von dem Chassis - oder auch Fahrgestell oder Rahmen genannt - erstreckenden Hubmast aufweisen, entlang welcher die Ware mit geeigneten Mitteln angehoben oder abgesenkt werden kann. Da der individuelle Aufbau eines solchen Flurförderzeugs vorliegend keinen Einfluss auf die Erfindung hat, wird hierauf nicht näher eingegangen. Der Aufbau des Flurförderzeugs kann vielmehr ein an sich bekannter Aufbau sein.

Neben den zumeist zwei Antriebsradanordnungen umfassen Flurförderzeuge oft zwei oder mehr Lasträder, die so am Chassis angeordnet sein können, dass von den zu transportierenden Lasten auf das Chassis wirkende Gewichtskräfte zu einem wesentlichen Teil über diese Lasträder in den Untergrund eingeleitet werden.

Bei zahlreichen bekannten Flurförderzeugen können Bodenunebenheiten und/oder Bodenneigungen zu einem der jeweiligen Bodenebene folgenden Neigen oder Kippen des Flurförderzeugs führen, insbesondere zu einem seitlichen Wanken. Dieser Effekt kann zusätzlich verstärkt sein, wenn ein Lastenteil und ein Antriebsteil des Flurförderzeugs fest bzw. starr, insbesondere ohne einen Höhenausgleich, miteinander verbunden sind. Ferner kann hierbei vermehrt ein unerwünschter Schlupf am Antriebsrad auftreten.

Aus der WO 2008/067926 A1 ist beispielsweise eine Antriebsradanordnung bekannt, welche über einen Drehteller drehbar gelagert ist, jedoch nicht höhenverlagerbar ist, so dass die vorgenannten Probleme auftreten können.

Aus der DE 196 04 226 A1 ist ein Hubmaststapler mit zwei lastnahen Lasträdern und zwei lastfernen Antriebsrädern bekannt. Bei solche Hubmaststaplern ist es üblicherweise vorgesehen, den Hubmast, insbesondere die Gabeln, gegenüber einer vom Grundfahrwerk aufgespannten Ebene neigen zu können, um einerseits zum Ein- und Auslagern von Paletten eine möglichst waagerechte Positionierung der Gabeln, und andererseits zum Fahren des Flurförderzeugs eine zum Hubmast geneigte Positionierung der Gabeln bereitzustellen, um insbesondere bei einem plötzlichen Bremsen des Fahrzeugs ein Verrutschen oder Herunterfallen der Ladung, insbesondere nach vorne, zu vermeiden. Hierzu sind verschiedene technische Ausgestaltungen zum Verstellen der Neigung bekannt, insbesondere ist üblicherweise der Hubmast gegenüber dem Fahrzeugchassis neigbar oder die lastnahen Lasträder höhenverlagerbar ausgebildet, wobei bei Letzterem oftmals ein Ruckeln der Gabeln auftreten kann. In der DE 196 04 226 A1 sind die lastfernen Antriebsrädern höhenverlagerbar ausgebildet, um insbesondere aufgrund des größeren Hebelarms ein weniger ruckelndes Neigen der Hubgabeln zu ermöglichen. Die beim Überfahren von Bodenunebenheiten auftretenden Neig- oder Wankbewegungen des Fahrzeugs können hierdurch jedoch nicht kompensiert werden.

Aus der DE 696 20 789 T2 ist ferner ein Hubwagen mit einem Lastenteil und einem Antriebsteil bekannt, wobei der Lastenteil gegenüber dem Antriebsteil höhenverlagerbar ist. Dadurch kann insbesondere ein Aufsetzen des relativ tiefliegenden Lastenteils an einer Bodenunebenheit vermieden werden. Die insbesondere in seitlicher Hinsicht starre Verbindung zwischen dem Lastenteil und dem Antriebsteil bewirkt jedoch, dass der Hubwagen sich bei Bodenunebenheiten neigt und anfangen kann, zu schwanken. Dies kann letztlich bis zu einem Herunterfallen der Ladung und/oder einem vollständigen Umkippen des Fahrzeugs führen, insbesondere bei hohen Geschwindigkeiten, großen Fahrzeugen und/oder besonders schweren Lasten.

Aus der US 5 379 842 A ist ferner ein Schwerlast-Förderfahrzeug mit einer von einer Vielzahl einzelner Räder getragenen, ganzflächigen Transportfläche bekannt. Für eine gleichmäßige Gewichtsverteilung der Last auf der Transportfläche, insbesondere bei Bodenunebenheiten, ist jedes der Räder mit einer hydropneumatischen Niveauregulierung verschaltet und hierdurch insbesondere separat und unabhängig von der Stellung eines anderen Rads linear höhenverlagerbar. Dazu wird bei einer Höhenverlagerung eines Rads ein kompressibles Gas in einen separaten Druckspeicher komprimiert oder entspannt. Solche Systeme zum Ausgleichen von Bodenunebenheiten sind jedoch relativ platz- und kostenintensiv. Insbesondere der oder die Druckspeicher zur Aufnahme und Abgabe des kompressiblen Gases erfordern einen relativ großen Bauraum im Fahrzeug; ferner ist bei solchen System in der Regel die Anordnung eines zusätzlichen Verdichters zum Erzeugen oder Aufrechthalten des benötigten pneumatischen Drucks unerlässlich.

Um Unebenheiten des Untergrunds ausgleichen zu können, ist es ferner bekannt, die Antriebsradanordnungen an einem Pendelrahmen vorzusehen. Dieser Pendelrahmen ist dann um eine Pendelachse, die etwa senkrecht zu einer Verbindungslinie der beiden Antriebsradanordnungen und etwa mittig zwischen denselben verläuft, verkippbar an dem Chassis angelenkt. Nachteilig ist bei derartigen Flurförderzeugen, deren Antriebsradanordnungen an einem Pendelrahmen vorgesehen sind, dass die Radlaufflächen bei Unebenheiten ungleichmäßig belastet werden. Hierdurch kann sich der Laufflächenverschleiß erhöhen und die Haftreibung auf den Untergrund reduziert werden. Ferner können Flurförderzeuge, die mit derartigen Pendelrahmen ausgebildet sind, zu Wankbewegungen neigen, was insbesondere im Falle hoher Hubmasten von erheblichem Nachteil sein kann.

Aus der US 3 537 722 A ein Fahrgestell für Lastkraftwagen bekannt, bei dem die Räder einer Achse über ein Gelenkssystem und einen hydraulischen Verdrängungskörper höhenverlagerbar sind. Dabei können die als Rollmembran ausgebildeten Verdrängungskörper in einem begrenzten Bereich eine veränderbare Druckflächengröße generieren und zur Erzeugung einer Gleichgewichtslage hydraulisch miteinander verbunden sein. Derartige Systeme sind jedoch insbesondere aufgrund der größenveränderbaren Rollmembran ausschließlich zur Aufnahme vergleichsweise geringer Lasten und finden daher überwiegend bei Fahrzeugen mit mehreren Lasträdern Anwendung. Eine solche Ausgestaltung ist daher insbesondere aufgrund des erhöhten Platzbedarfs sowie der begrenzten Lastaufnahmefähigkeit für typische Flurförderzeuge ungeeignet.

Darüber hinaus ist aus der US 7 861 820 B1 ein Lenksystem für nicht-angetriebene Laufräder eines Flurförderzeugs bekannt, bei dem das Laufrad über ein Stangensystem höhenverlagerbar ist. Eine zusätzliche Antriebseinheit zum Antreiben des Laufrads ist nicht vorgesehen.

Ein weiteres Lenksystem für nicht-angetriebene Laufräder eines Flurförderzeugs sind aus der GB 2 410 014 A bekannt. Hierbei ist ein Laufrad mittels einer Kolben-Zylindereinheit höhenverlagerbar und mittels einer innerhalb dieser Kolben-Zylindereinheit angeordneten Linearführung bezüglich der auftretenden Querkräfte gestützt. Auch hierbei ist eine zusätzliche Antriebseinheit zum Antreiben des Laufrads ist nicht vorgesehen.

Aufgabe der vorliegenden Erfindung ist es daher, ein Flurförderzeug und eine Antriebsradlagervorrichtung bereitzustellen, welche jeweils zumindest einen der oben genannten Nachteile verbessert und insbesondere eine nahezu ruckel- und wankfreie Bewegung des Flurförderzeugs ermöglicht.

Diese Aufgabe wird durch ein Flurförderzeug mit den Merkmalen des Anspruchs 1 gelöst. Vorteilhafte Ausgestaltungen und Weiterbildungen der Erfindung sind in den Unteransprüchen, der Beschreibung sowie den Figuren offenbart.

Das erfindungsgemäße Flurförderzeug umfasst mindestens eine Führungsanordnung für jede Antriebsradanordnung. Die Führungsanordnung kann beispielsweise eine Höhenverlagerung der Antriebsradanordnung bewirken und stellt entweder eine Linearführung oder eine - beispielsweise gebogene - Führungsbahn mit jeweils einer Haupt-Führungsrichtungskomponente bereit, die etwa senkrecht zur Grundebene verläuft. Entlang dieser Linearführung oder Führungsbahn ist die jeweilige Antriebsradanordnung verlagerbar, beispielsweise höhenverlagerbar.

Bei der erfindungsgemäßen ersten Ausgestaltung, welche die eine Linearführung bereitstellende Führungsanordnung betrifft, ist zur Führung und Verlagerung der Antriebsradanordnung ein Schienen- oder Profilsystem vorgesehen, entlang dessen die Antriebsradanordnung verlagerbar ist. Dadurch können Schwankbewegungen des Flurförderzeugs vermieden und neben den Lasträdern auch an den Antriebsrädern besonders große Lastkräfte aufgenommen werden, so dass das Flurförderzeug ein besonders großes Maximal-Beladungsgewicht aufweisen kann. Ferner ist es vorgesehen, dass jede Linearführungsanordnung mindestens ein Führungselement umfasst. Das Führungselement kann beispielsweise als ein an sich bekanntes Schienen- oder Profilsystem zur Linearführung zweier Bauteile zueinander ausgebildet sein. Jedes Führungselement ist an zwei, insbesondere separaten, Lagerstellen mit dem Chassis verbunden. Dadurch kann in vorteilhafter Weise eine besonders sichere Führung an der Führungsanordnung gewährleistet werden. Um Probleme aufgrund einer statisch überbestimmten Lagerung wirksam zu vermeiden, ist eine der Lagerstellen als ein Festlager, die andere der Lagerstellen als ein Loslager ausgebildet. Die in Führungsrichtung auf das jeweilige Führungselement wirkenden Kräfte werden so lediglich über eine der Lagerstellen in das Chassis eingeleitet.

Bei der alternativen erfindungsgemäßen zweiten Ausgestaltung, welche die eine Führungsbahn bereitstellende Führungsanordnung betrifft, weist die Führungsanordnung erfindungsgemäß mindestens drei, jeweils ein erstes Ende und ein zweites Ende aufweisende Lenker sowie eine eine erste Seite und eine zweite Seite aufweisende Koppel auf. Die Lenker - oder auch Querstreben genannt - sind jeweils mit ihrem ersten Ende an einer an dem Chassis angeordneten Lagerstelle und mit ihrem zweiten Ende an einer an der ersten Seite der Koppel angeordneten Lagerstelle jeweils um vorzugsweise parallele Drehachsen verschwenkbar angelenkt oder gelagert. Die an dem Chassis angeordneten Lagerstellen werden vorliegend auch als erste, zweite und dritte Lagerstelle, die an der Koppel angeordneten Lagerstellen als vierte, fünfte und sechste Lagerstelle bezeichnet. Die Lagerstellen sind vorzugsweise derart ausgebildet, dass die Drehachsen parallel zur Ebene verlaufen. Durch die Verschwenkung entlang der Führungsbahn können sowohl Verkippungen relativ zum Chassis vermieden als auch die Laufflächenbelastung der Antriebsräder vorteilhafterweise gleichmäßig verteilt werden.

Erfindungsgemäß ist die eine Linearführung oder alternativ eine Führungsbahn bereitstellende Führungsanordnung derart ausgebildet, dass über sie zumindest ein Teil, vorzugsweise der wesentliche Teil der Antriebs-, Brems- und/oder Lenkkräfte von der jeweiligen Antriebsradanordnung in das Chassis eingeleitet werden kann. Aufgrund dieser 'unterstützenden' Maßnahme ist vermieden, dass wesentliche über die Gewichtskräfte hinausgehende Kräfte überwiegend über die Kolben-Zylindereinheit vom Chassis in die Antriebsradanordnungen eingeleitet werden, so dass der Einfluss von Antriebs-, Brems- und/oder Lenkkräften auf die Lage des Fahrzeugs relativ zum Untergrund minimiert ist.

Ferner umfasst das erfindungsgemäße Flurförderzeug mindestens eine vorzugsweise hydraulisch wirkende Kolben-Zylindereinheit pro Antriebsradanordnung. Jede Kolben-Zylindereinheit weist eine Kolbenseite und eine Zylinderseite sowie zumindest ein erstes Zylindervolumen oder anders gesagt einen ersten Zylindervolumenraum auf. Jede Kolben-Zylindereinheit ist jeweils mit der Kolbenseite oder mit der Zylinderseite mit dem Chassis und mit der jeweils anderen Kolben- oder Zylinderseite mit der Antriebsradanordnung verbunden. Dadurch kann zumindest ein Teil der vom Chassis auf die jeweilige Antriebsradanordnung wirkenden, etwa vertikalen Kräfte über mindestens eine vorzugsweise hydraulisch wirkende Kolben-Zylindereinheit in die jeweilige Antriebsradanordnung eingeleitet werden. Bei der erfindungsgemäßen Ausgestaltung mit mehreren Antriebsradanordnungen und folglich mit mehreren Kolben-Zylindereinheiten sind die ersten Zylindervolumina, das heißt die jeweils ersten Zylindervolumenräume, der Kolben-Zylindereinheiten vorzugsweise hydraulisch miteinander verbunden, so dass ein Einrücken der einen Antriebsradanordnung, d.h. eine Verlagerung derselben relativ zum Chassis nach oben, zum Ausrücken der anderen Antriebsradanordnung, d.h. zur einer Verlagerung relativ zum Chassis nach unten (jeweils bezogen auf die aufrechte Betriebsstellung des Flurförderzeugs) führt. Aufgrund der vorzugsweise hydraulischen Kopplung wird die Belastung der Antriebsradanordnungen und insbesondere der Laufflächen weiterhin vergleichmäßigt und die Wankneigung des Flurförderzeugs reduziert.

Vorzugsweise ist die Kolben-Zylindereinheit derart angeordnet, dass eine Wirkrichtung der Kolben-Zylindereinheit, das heißt eine Verschieberichtung des Kolbens innerhalb des Zylinders, in etwa senkrecht zu der Ebene verläuft. Bevorzugt ist jede der Kolben-Zylindereinheiten derart angeordnet und/oder ausgebildet, dass sie aufgrund der abzufangenden Gewichtskräfte auf hydraulischen Druck belastet werden kann. Insbesondere kann die Kolben-Zylindereinheit in der Betriebsstellung des Flurförderzeugs im Wesentlichen aufrecht oder senkrecht an einer Antriebsradanordnung angeordnet sein, so dass eine Gewichtskraftkomponente in die Kolben-Zylindereinheit eingeleitet werden kann und folglich die Kolben-Zylindereinheit, insbesondere ein hydraulischer Druck im Zylindervolumen, beispielsweise ein Lastgewicht aufnehmen kann. Dadurch kann das Flurförderzeug - trotzt der im Wesentlichen höhenverlagerbaren Antriebsradanordnung - auch besonders schwere Lasten transportieren.

Vorzugsweise sind die Kolben-Zylindereinheiten jeweils einfachwirkend ausgebildet. Hiermit ist gemeint, dass jeweils nur eines der kolbenseitigen und kolbenstangenseitigen Volumina, vorzugsweise lediglich das kolbenseitige Volumen, hydraulisch beispielsweise miteinander verbunden ist. Eine Rückstellkraft des Kolbens kann dadurch beispielsweise durch den hydraulischen Druckausgleich oder beispielsweise durch ein Rückstellfederelement erfolgen.

Vorzugsweise weist zumindest eine Kolben-Zylindereinheit zusätzlich ein zweites Zylindervolumen oder anders gesagt einen zusätzlichen zweiten Zylindervolumenraum auf. Besonders bevorzugt weisen zumindest zwei Kolben-Zylindereinheiten jeweils zusätzlich ein zweites Zylindervolumen, wobei diese beiden zweiten Zylindervolumina miteinander verbunden sein können. Dadurch kann die Betriebssicherheit des Flurförderzeugs erhöht werden, indem - wie besonders bevorzugt - die jeweils zweiten Zylindervolumina vorzugsweise hydraulisch ebenfalls miteinander verbunden sind. Diese Maßnahme bewirkt mit anderen Worten, dass zwei voneinander unabhängige Hydrauliksysteme geschaffen werden:
- ein erstes Hydrauliksystem, welches die ersten Zylindervolumina und die diese vorzugsweise hydraulisch verbindenden Mittel umfasst, sowie
- ein zweites Hydrauliksystem, welches die zweiten Zylindervolumina und die diese vorzugswiese hydraulisch verbindenden Mittel umfasst.

Die Funktionalität, dass die Verlagerungen der Antriebsradanordnungen relativ zum Chassis voneinander abhängig sind, bleibt somit selbst für den Fall erhalten, dass eines der beiden Hydrauliksysteme eine Leckage aufweist.

Vorzugsweise ist bei der Variante der eine Führungsbahn bereitstellenden Führungsanordnung die jeweilige Antriebsradanordnung mit der zweiten Seite der Koppel verbunden. Die Verbindung der beiden Bauteile kann beispielsweise über ein Verbindungselement erfolgen, besonders bevorzugt ist die zweite Seite der Koppel direkt an der Antriebsradanordnung bzw. an einer Antriebsradlagerstruktur der Antriebsradanordnung angeordnet. Aufgrund dieser Maßnahme kann für die Antriebsradanordnung ein größerer Einbauraum eines Fahrzeugs zur Verfügung gestellt werden, als dies bei einer Verbindung der jeweiligen Antriebsradanordnung mit der ersten Seite der Koppel möglich wäre.

Vorzugsweise sind bei der eine Führungsbahn bereitstellenden Führungsanordnung zumindest zwei der an dem Chassis angeordneten Lagerstellen und zumindest zwei der an der Koppel angeordneten Lagerstellen jeweils auf einer sich etwa senkrecht zur Ebene erstreckenden Geraden angeordnet. Sind - wie bevorzugt - neben den an dem Chassis angeordneten Lagerstellen auch die an der Koppel angeordneten Lagerstellen auf einer sich etwa senkrecht zur Ebenen erstreckenden Geraden angeordnet, was beispielsweise bewerkstelligt werden kann, wenn ausgehend von einer Anordnung der an dem Chassis angeordneten Lagerstellen auf einer sich senkrecht zur Ebene erstreckenden Geraden die Lenker zumindest etwa identische Längen aufweisen, so vollzieht die jeweilige Antriebsanordnung - mit Ausnahme einer von der Länge der Koppeln abhängigen Bewegungskomponente parallel zur Ebene - vorteilhafterweise im Wesentlichen lediglich die zur Ebene senkrechte Führungsrichtungskomponente. Besonders bevorzugt sind insgesamt drei jeweils mit einem ersten Ende an einer an dem Chassis angeordneten Lagerstelle und mit einem zweiten Ende an einer ersten Seite der Koppel angeordneten Lagerstelle gelagerte Lenker vorgesehen, wobei zumindest zwei der an dem Chassis angeordneten Lagerstellen, beispielsweise die erste und zweite Lagerstelle, auf einer sich etwa senkrecht zur Grundebene erstreckenden ersten Geraden und die dritte Lagerstelle vorzugsweise in eine von der Antriebsradanordnung abgewandte Richtung versetzt zu dieser sich etwa senkrecht zur Grundebene erstreckenden ersten Geraden angeordnet sind, und zumindest zwei der an der Koppel angeordneten Lagerstellen, beispielsweise die vierte und fünfte Lagerstelle, auf einer sich etwa senkrecht zur Grundebene erstreckenden zweiten Geraden und die sechste Lagerstelle vorzugsweise in eine auf den Lenker zugewandte Richtung versetzt zu dieser sich etwa senkrecht zur Grundebene erstreckenden ersten Geraden angeordnet sind. Besonders bevorzugt entspricht der Abstand zwischen der versetzt angeordneten dritten Lagerstelle und der ersten Geraden dem Abstand zwischen der versetzt angeordneten sechsten Lagerstelle und der zweiten Geraden. Dadurch kann eine besonders sichere Führung an der Führungsanordnung gewährleistet werden.

Vorzugsweise sind die bei der eine Führungsbahn bereitstellenden Führungsanordnung vorgesehenen Lenker stets parallel zueinander angeordnet. Dadurch kann in vorteilhafter Weise eine besonders sichere Führung an der Führungsanordnung gewährleistet werden.

Vorzugsweise umfasst jede Antriebsradanordnung einen mit dem jeweils mindestens einen Antriebsrad gekoppelten Drehantriebsmotor. Hierbei kann es sich insbesondere um einen hydraulisch oder elektrisch betriebenen Drehantriebsmotor handeln.

Darüber hinaus ist es besonders bevorzugt, wenn jeder Drehantriebsmotor mit der Antriebsradanordnung in Führungsrichtung verlagerbar angeordnet ist. Dadurch können insbesondere aufwändige, Relativverlagerungen zwischen den Antriebsrädern und den jeweiligen Drehantriebsmotoren erlaubende Verbindungen eingespart werden.

Die erfindungsgemäße Antriebsradlagervorrichtung für Flurförderzeuge mit den Merkmalen nach einem der Ansprüche 1 bis 10 umfasst im Wesentlichen eine Tragstruktur für eine gegenüber einem Chassis höhenverlagerbare Anordnung eines Antriebsrads. Dazu weist die Antriebsradlagervorrichtung erfindungsgemäß einen im Wesentlichen parallel zur Grundebene ausgebildeten ersten Befestigungsbereich und einen zu der Grundebene im Wesentlichen senkrecht angeordneten separaten zweiten Befestigungsbereich auf. An dem ersten Befestigungsbereich ist eine sich im Wesentlichen senkrecht zu der Ebene längserstreckende und gegenüber der Tragstruktur drehbar gelagerte Radaufhängungsstruktur befestigt. An der Radaufhängungsstruktur ist zumindest ein Antriebsrad mit einer im Wesentlichen parallel zu der Ebene angeordneten Hauptdrehachse und zumindest ein Antriebsmotor zum Antreiben und/oder zum Verschwenken des Antriebsrads gegenüber der Tragstruktur angeordnet. Bevorzugt ist die Hauptdrehachse dieses Antriebsmotors im Wesentlichen senkrecht zur Grundebene angeordnet. An dem zweiten Befestigungsbereich sind Mittel zur Befestigung der Tragstruktur an einem Chassis angeordnet. Diese Mittel dienen vorzugsweise für eine höhenverlagerbare Lagerung der Tragstruktur gegenüber dem Chassis und können insbesondere Bestandteil der zuvor beschriebenen Führungsanordnung sein. Beispielsweise sind die Mittel Teil der zuvor beschriebenen Linearführungsanordnung, wie beispielsweise eine Führungsschiene. Alternativ sind die Mittel beispielsweise übereinander angeordnete Lagerstellen, wie in Bohrungen gelagerte Bolzen, an denen bei der eine Führungsbahn bereitstellenden Führungsanordnung die zuvor beschriebenen Lenker antriebsradseitig gelagert sein können. Dadurch kann die Antriebsradlagervorrichtung bzw. die Antriebsradanordnung besonders platzsparend aufgebaut und in ihrer Wirkungsweise auch bei sehr großen Lastaufnahmekräften besonders effektiv sein.

Nachfolgend wird die Erfindung anhand der beigefügten, rein schematischen Zeichnungen weiter erläutert werden. Es zeigen schematisch:
- Figur 1: ein erfindungsgemäßes Flurförderzeugs ohne Aufbauten in perspektivischer Darstellung;
- Figur 2: eine Fahrsituation des Flurförderzeugs aus Fig.1;
- Figur 3a: eine erste Ausgestaltung des Flurförderzeugs mit einer Linearführungsanordnung in einer Prinzipskizze;
- Figuren 3b und 3c: jeweils die beiden Antriebsradanordnungen aus Figur 3a in unterschiedlichen Fahrsituationen in einer Prinzipskizze;
- Figuren 3d, 3e, 3f: jeweils eine Seitenansicht einer Antriebsradanordnung mit einer Linearführungsanordnung in unterschiedlichen Positionen;
- Figur 4a: eine zweite Ausgestaltung des Flurförderzeugs mit einer Bogenführungsanordnung in einer Prinzipskizze;
- Figuren 4b und 4c: jeweils die beiden Antriebsradanordnungen aus Figur 4a in unterschiedlichen Fahrsituationen in einer Prinzipskizze; und
- Figuren 4d, 4e, 4f: jeweils eine Seitenansicht der Antriebsradanordnung mit einer erweiterten Bogenführungsanordnung in unterschiedlichen Positionen.

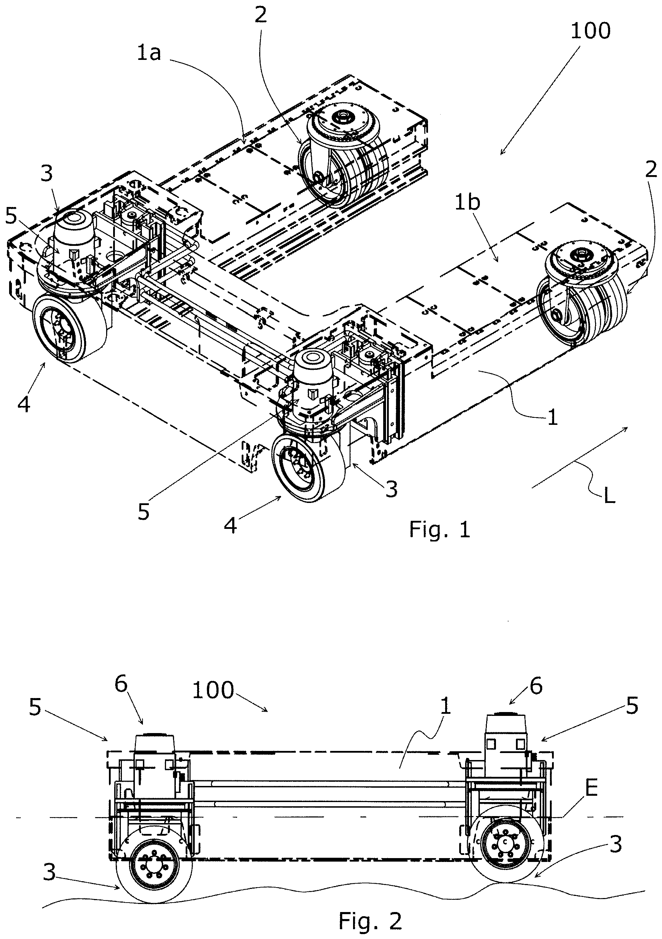

Das in den Figuren jeweils mit 100 bezeichnete erfindungsgemäße Flurförderzeug umfasst ein Chassis 1, welches eine etwa parallel zu einem Untergrund verlaufende Ebene E definiert. Wie insbesondere in Figur 1 erkennbar, kann in einem Bereich des Chassis 1, in dem das Chassis zwei Schenkelstrukturen 1a, 1b aufweist, eine nicht dargestellte Lastaufnahmeeinrichtung angeordnet sein. In diesem Bereich sind zwei nicht angetriebene Lasträder 2 vorgesehen. Bezogen auf eine Längsfahrtrichtung L beabstandet von den Lasträdern 2 sind zwei Antriebsradanordnungen 3 an dem Chassis 1 vorgesehen. Jede Antriebsradanordnung 3 umfasst ein Antriebsrad 4, welches mittels eines insbesondere elektrisch oder hydraulisch angetriebenen Drehantriebsmotor 5 drehantreibbar ist.

Das Antriebsrad 4 und der Drehantriebsmotor 5 sind zu einer Baugruppe 6 zusammengefasst, die mittels einer etwa senkrecht zur Ebene E wirkenden Führungsanordnung 10, 20 an dem Chassis 1 gelagert ist. Die Baugruppe 6 kann als eine Antriebsradlagervorrichtung 8 ausgebildet sein, die eine Tragstruktur 80 aufweist, welche einen im Wesentlichen parallel zu der Ebene E ausgebildeten ersten Befestigungsbereich 81 und einen zu der Ebene E im Wesentlichen senkrecht angeordneten separaten zweiten Befestigungsbereich 82 aufweist. An dem ersten Befestigungsbereich 81 ist eine sich im Wesentlichen senkrecht zu der Ebene E erstreckende und gegenüber der Tragstruktur 80 drehbar gelagerte Radaufhängungsstruktur 83 angeordnet. An der Radaufhängungsstruktur 83 ist zumindest das eine Antriebsrad 4 mit einer im Wesentlichen parallel zu der Ebene E angeordneten Hauptdrehachse 41 und zumindest ein Antriebsmotor 5, 40 zum Antreiben, insbesondere für eine Rotation um eine Hauptdrehachse 41, und/oder zum Verschwenken des Antriebsrads 4 gegenüber der Tragstruktur 80 um eine senkrecht zur Ebene E angeordnete Achse angeordnet. Beispielsweise wird der Antriebsmotor 5 zum Lenken und der Antriebsmotor 40 zum Fahren des Flurförderzeugs 100 genutzt. Der zweite Befestigungsbereich 82 weist insbesondere Mittel 84 zur Befestigung der Tragstruktur 80 an einem Chassis 1 auf.

Die gesamte Baugruppe 6 ist über die Führungsanordnung 10, 20 jeweils im Wesentlichen senkrecht zur Ebene E verlagerbar an dem Chassis 1 angebracht, welches beispielsweise in der Figur 2 erkennbar ist. Hierbei ist das in der Figur 2 links gezeigte Antriebsrad 4 gegenüber dem Chassis 1 weiter ausgefahren als das in der Figur 2 rechts gezeigte Antriebsrad 4. Zur Aufnahme einer Gewichtskraft bzw. zur Abstützung der Antriebsradanordnung 3 gegenüber dem Chassis 1 ist für jede Baugruppe 6 jeweils eine hydraulische Kolben-Zylindereinheit 30 vorgesehen, die einen Ends 34b mit dem Chassis 1 und anderen Ends 34a mit der Antriebsradanordnung 3 bzw. der Tragstruktur 80 verbunden ist.

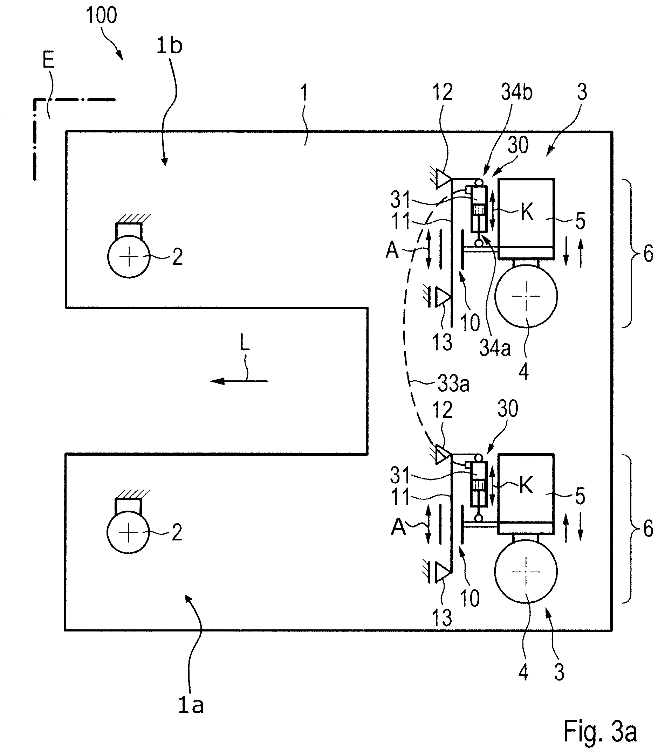

In einer ersten erfindungsgemäßen Ausführung ist die Führungsanordnung 10, wie in den Figuren 3a bis 3f im Detail dargestellt ist, als eine Linearführungsanordnung, umfassend ein Führungselement 11, welches an zwei Lagerstellen 12, 13 an dem Chassis 1 angebracht ist. Die Lagerstelle 12 ist als Festlager, die Lagerstelle 13 als Loslager ausgebildet, um eine statische Überbestimmtheit zu vermeiden.

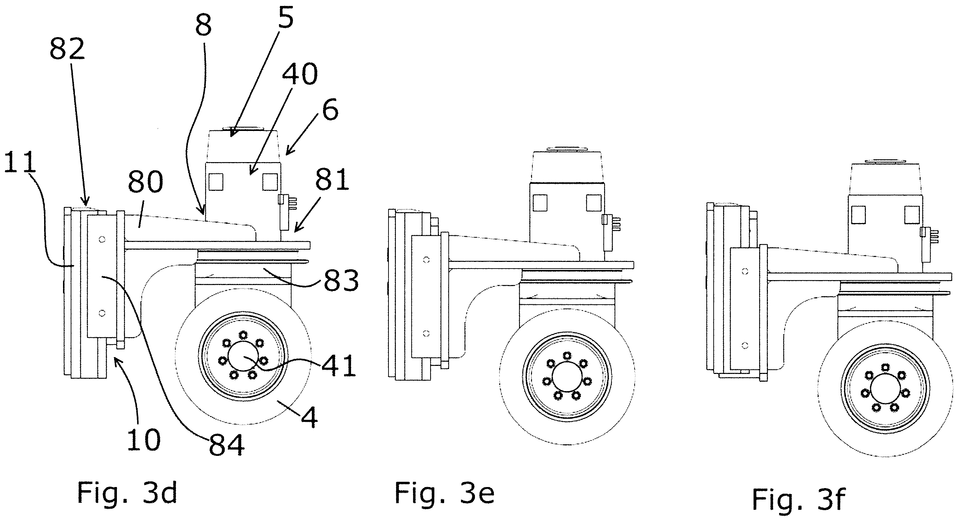

Das Führungselement 11 ist vorliegend als ein Bestandteil eines Schienensystems ausgebildet, bei dem ein an der Antriebsradanordnung 3 angeordnetes und an dem als eine Schiene ausgebildeten Führungselement 11 geradlinig verschiebbar gelagertes Gleitelement vorgesehen ist. Hierbei ist die gesamte Antriebsradanordnung 3 oder Baugruppe 6, umfassend das Antriebsrad 4 und den Drehantriebsmotor 5 entlang der Schiene 11 in Richtung A verschiebbar gelagert, insbesondere höhenverlagerbar, welches insbesondere in der in den Figuren 3d, 3e und 3f dargestellten Ausgestaltung dargestellt ist.

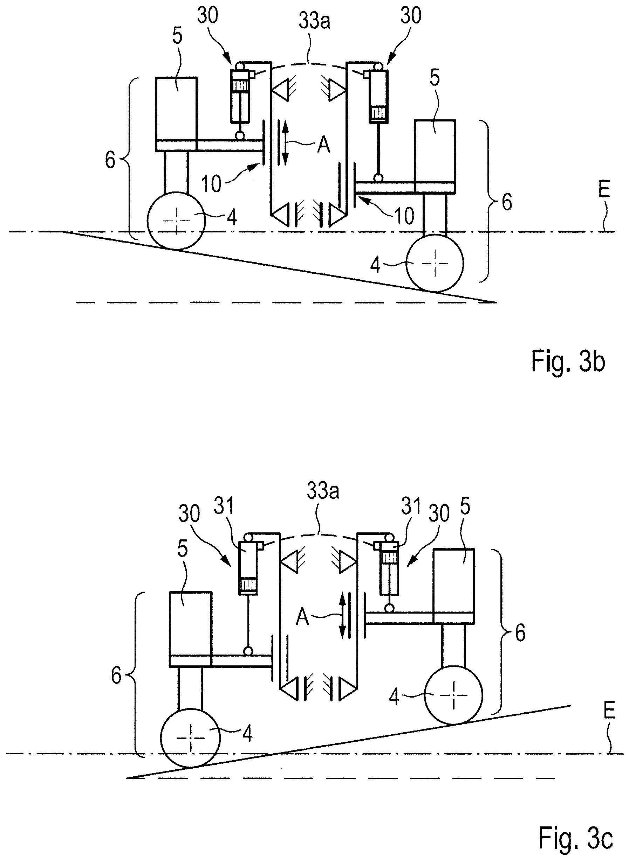

Die in den Figuren 3a, 3b und 3c beispielhaft gezeigten beiden Kolben-Zylindereinheiten 30 zur Abstützung der Antriebsradanordnung 3 gegenüber dem Chassis 1 umfassen jeweils ein erstes Zylindervolumen 31, die über eine zumindest im Wesentlichen drosselfrei wirkende erste Leitung 33a hydraulisch miteinander verbunden sind. Dadurch kann ein Hydraulikmedium je nach vorliegender Unebenheit von dem ersten Zylindervolumen 31 der einen Kolben-Zylindereinheiten 30 in das erste Zylindervolumen 31 der anderen Kolben-Zylindereinheiten 30 gedrückt werden.

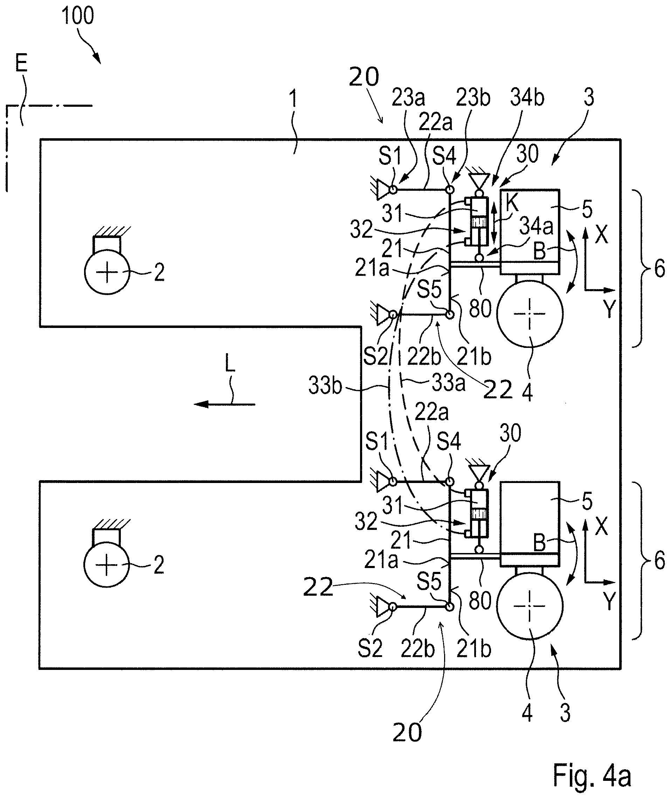

In einer zweiten erfindungsgemäßen Ausführung ist die Führungsanordnung 20, wie in den Figuren 4a bis 4f im Detail dargestellt ist, als eine Bogenführungsanordnung ausgebildet. Diese Bogenführungsanordnung 20 umfasst im Wesentlichen eine an der Baugruppe 6 schwenkbar gelagerte Koppel 21 sowie mehrere die Koppel 21 mit dem Chassis 1 verbindende und ebenfalls schwenkbar gelagerte Verbindungselemente oder Lenker 22.

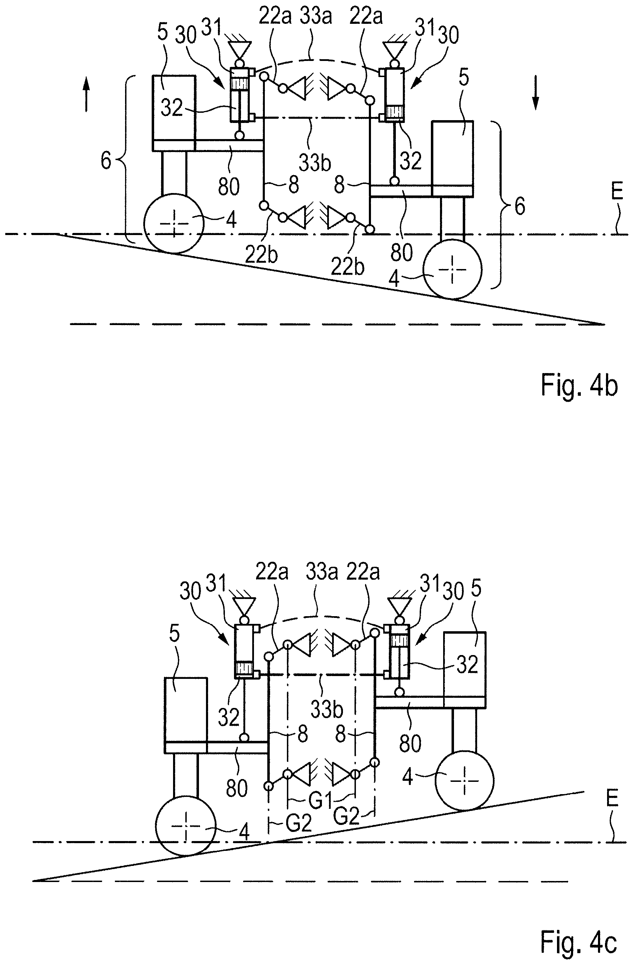

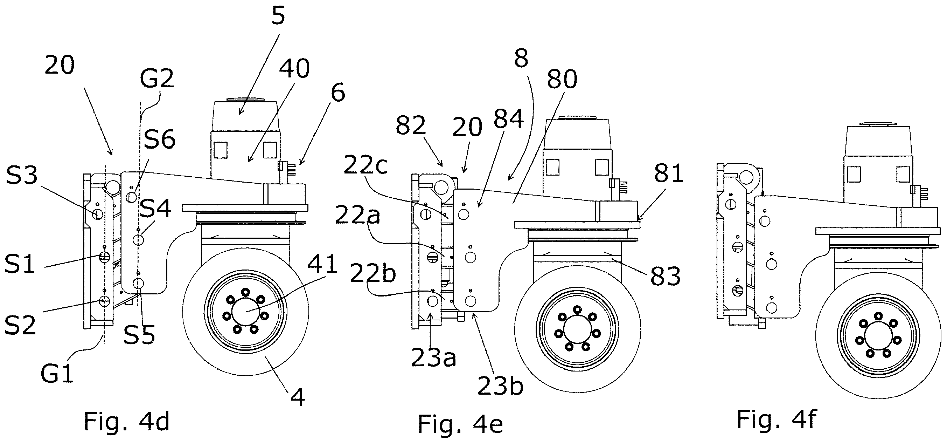

In der in den Figuren 4a, 4b und 4c gezeigten Ausgestaltung sind pro Antriebsradanordnung 3 jeweils insgesamt zwei Verbindungselemente 22 vorgesehen, nämlich ein erster Lenker 22a und ein zweiter Lenker 22b. In der in Figuren 4d, 4e und 4f gezeigten erweiterten oder modifizierten Ausgestaltung sind pro Antriebsradanordnung 3 jeweils insgesamt drei Verbindungselemente 22 vorgesehen, nämlich ein erster Lenker 22a, ein zweiter Lenker 22b und ein dritter Lenker 22c. Je nach Ausgestaltung sind die Lenker 22a, 22b, 22c jeweils mit einem ersten Lenkerende 23a an einer jeweiligen ersten Lagerstelle S1, S2, S3 um zueinander parallele Drehachsen an dem Chassis 1 und mit einem gegenüberliegenden zweiten Lenkerende 23b an einer jeweiligen zweiten Lagerstelle S4, S5, S6 um zueinander parallele Drehachsen an einer ersten Seite 21a einer Koppel 21 schwenkbar gelagert. An einer der ersten Seite 21a gegenüberliegenden zweiten Seite 21b der Koppel 21 ist die Koppel 21 an einer Tragstruktur 80 mit der Baugruppe 6 verbunden.

Zwei der ersten Lagerstellen, nämlich Lagerstelle S1 und S2, befinden sich auf einer Geraden G1, die optional zusätzliche dritte erste Lagerstelle S3 ist in Bezug auf die Gerade G1 versetzt angeordnet, welches insbesondere in den Figuren 4d, 4e, 4f gezeigt ist. Ebenfalls befinden sich zwei der zweiten Lagerstellen, nämlich Lagerstelle S4 und S5 auf einer Geraden G2, die optional zusätzliche dritte zweite Lagerstelle S6 ist in Bezug auf die Gerade G2 versetzt angeordnet. Die beiden Geraden G1 und G2 verlaufen etwa senkrecht zur Ebene E sowie parallel zueinander.

Die Baugruppe 6 ist somit entlang einer Führungsbahn B, die eine Bewegungskomponente X senkrecht zur Ebene E und eine Bewegungskomponente Y parallel zur Ebene E umfasst, gelagert. Die Koppel 21 und die Lenker 22a, 22b, 22c bilden somit den Hauptbestandteil der Bogenführungsanordnung 20.

Die in den Figuren 4a, 4b und 4c beispielhaft gezeigten beiden Kolben-Zylindereinheiten 30 umfassen jeweils neben dem ersten Zylindervolumen 31, die über eine erste Leitung 33a hydraulisch miteinander verbunden sind, zusätzlich ein zweites Zylindervolumen 32, die über eine zweite Leitung 33b hydraulisch miteinander verbunden sind. Die Leitungen 33a, 33b können im Wesentlichen drosselfrei oder auch mit vorzugsweise einstellbaren Drosseln versehen sein. Dadurch kann ein Hydraulikmedium je nach vorliegender Unebenheit von dem ersten Zylindervolumen 31 einer ersten Kolben-Zylindereinheit 30 in das erste Zylindervolumen 31 einer zweiten Kolben-Zylindereinheiten 30 und von dem zweiten Zylindervolumen 32 der zweiten Kolben-Zylindereinheiten 30 in das zweiten Zylindervolumen 32 der ersten Kolben-Zylindereinheiten 30 gedrückt werden, wie beispielsweise in Figuren 2, 4b und 4c dargestellt. Dadurch ist ein besonders sicherer Betrieb des Hydrauliksystems ermöglicht, beispielsweise kann der Hydraulikdruck gleichmäßig auf beide Hydraulikleitungen verteilt werden.

Die Funktionsweise des erfindungsgemäßen Fahrzeugs 100 soll nun für jede der oben genannten Ausführungsform anhand der Figuren 3a und 3b, sowie 4a und 4b, weiter erläutert werden.

Wird das gemäß Fig. 3a in Blickrichtung links dargestellte Antriebsrad 4 beispielsweise durch eine Untergrundunebenheit nach oben verlagert, so führt die hiermit verbundene Reduzierung des ersten Zylindervolumens 31 der linken Kolben-Zylindereinheit 30 dazu, dass Hydraulikmedium über die erste Leitung 33a zumindest im wesentlichen drosselfrei in das erste Zylindervolumen 31 der in Fig. 3a rechts dargestellten Kolben-Zylindereinheit 30 gedrückt und damit die rechts dargestellte Baugruppe 6 mit dem Antriebsrad 4 nach unten verlagert wird. Dieser Vorgang erfolgt selbstverständlich nur, wenn das in Fig. 3a) links dargestellte Antriebsrad 4 stärker als das rechts dargestellte Antriebsrad 4 belastet wird. Ein umgekehrter Bewegungsablauf bei umgekehrten Belastungsverhältnissen ist entsprechend in Fig. 3b dargestellt.

Wird das gemäß Fig. 4a in Blickrichtung links dargestellte Antriebsrad 4 beispielsweise durch eine Untergrundunebenheit nach oben verlagert, so führt die hiermit verbundene Reduzierung des ersten Zylindervolumens 31 und Vergrößerung des zweiten Zylindervolumens 32 der links dargestellten Kolben-Zylindereinheit 30 dazu, dass ein Hydraulikmedium über die erste Hydraulikleitung 33a in das erste Zylindervolumen 31 der in Fig. 4a) rechts dargestellten Kolben-Zylindereinheit 30 gedrückt und ein Hydraulikmedium von dem zweiten Zylindervolumen 32 in der rechts dargestellten Kolben-Zylindereinheit 30 in das zweite Zylindervolumen 32 der links dargestellten Kolben-Zylindereinheit 30 über die zweite Leitung 33b gedrückt und damit die rechts dargestellte Baugruppe 6 mit dem Antriebsrad 4 nach unten verlagert wird. Dieser Vorgang erfolgt selbstverständig nur, wenn das in Fig. 4a) links dargestellte Antriebsrad 4 stärker als das rechts dargestellte Antriebsrad 4 belastet wird. Ein umgekehrter Bewegungsablauf bei umgekehrten Belastungsverhältnissen ist entsprechend in Fig. 4b) dargestellt.

### Bezugszeichenliste:

- 100: Flurförderzeug
- 1: Chassis, Fahrgestell, Rahmen, Untergestell
- 1a: Schenkelstruktur
- 1b: Schenkelstruktur
- 2: Lasträder
- 3: Antriebsradanordnung
- 4: Antriebsrad
- 5: Drehantriebsmotor
- 6: Baugruppe
- 8: Antriebsradlagervorrichtung

- 10: Führungsanordnung, Linearführungsanordnung
- 11: Führungselement
- 12: Lagerstelle
- 13: Lagerstelle

- 20: Führungsanordnung, Führungsbahnanordnung
- 21: Koppel
- 21a: erste Seite
- 21b: zweite Seite
- 22: Verbindungselement, Lenker
- 22a: Lenker
- 22b: Lenker
- 22c: Lenker
- 23a: erstes Lenkerende
- 23b: zweites Lenkerende

- 30: Kolben/Zylindereinheit
- 31: erstes Zylindervolumen
- 32: zweites Zylindervolumen
- 33a: erste Leitung
- 33b: zweite Leitung
- 33c: dritte Leitung
- 34a: Kolbenseite
- 34b: Zylinderseite

- 40: Antriebsmotor
- 41: Hauptdrehachse

- 80: Tragstruktur
- 81: erste Befestigungsstruktur
- 82: zweite Befestigungsstruktur
- 83: Radaufhängungsstruktur
- 84: Mittel zur Befestigung

- A: Linearführung
- B: Führungsbahn
- E: Ebene
- G1: Gerade
- G2: Gerade
- K: Wirkrichtung Kolben-Zylindereinheit
- L: Längsfahrtrichtung
- S1: erste Lagerstelle
- S2: zweite Lagerstelle
- S3: dritte Lagerstelle
- S4: vierte Lagerstelle
- S5: fünfte Lagerstelle
- S6: sechste Lagerstelle
- X: Führungsrichtungskomponente
- Y: Führungsrichtungskomponente

## Patentansprüche

1. Flurförderzeug (100),
mit einem eine Ebene (E), die in einer Betriebsstellung des Flurförderzeugs (100) etwa parallel zum Untergrund verläuft, definierenden Chassis (1),
mit mindestens zwei jeweils zumindest ein Antriebsrad (4) aufweisenden Antriebsradanordnungen (3),
mit mindestens einer Führungsanordnung (10, 20) für jede der Antriebsradanordnungen (3), wobei die Führungsanordnung (10, 20) entweder eine Linearführung (A) mit einem Schienen- oder Profilsystem zur Führung und Verlagerung der Antriebsradanordnung (3) oder eine Führungsbahn (B), entlang welcher die Antriebsradanordnung (3) jeweils verlagerbar ist, mit einer Führungsrichtungskomponente (X) aufweist, die etwa senkrecht zur Ebene (E) verläuft, und die Führungsanordnung (10, 20) derart ausgebildet ist, dass über diese zumindest ein Teil der Antriebs-, Brems- und/oder Lenkkräfte von der jeweiligen Antriebsradanordnung (3) in das Chassis (1) eingeleitet werden,
wobei die eine Linearführung (A) aufweisende Führungsanordnung (10) mindestens ein Führungselement (11) umfasst, welches in Führungsrichtung an zwei Lagerstellen (12, 13) mit dem Chassis (1) verbunden ist, wobei eine erste Lagerstelle (12) als Festlager und die andere zweite Lagerstelle (13) als Loslager ausgebildet ist,
wobei die eine Führungsbahn (B) aufweisende Führungsanordnung (20) mindestens drei jeweils ein erstes Ende (23a) und ein zweites Ende (23b) aufweisende Lenker (22a, 22b, 22c) sowie eine eine erste Seite (21a) und eine zweite Seite (21b) aufweisende Koppel (21) umfasst, wobei die Lenker (22a, 22b, 22c) jeweils mit dem ersten Ende (23a) an einer an dem Chassis angeordneten Lagerstelle (S1, S2, S3) und mit dem zweiten Ende an einer an der Koppel (21) angeordneten Lagerstelle (S4, S5, S6) angelenkt sind derart, dass sie sich von der ersten Seite (21a) forterstrecken,
und
mit mindestens einer hydraulisch wirkenden, eine Kolbenseite (34a) und eine Zylinderseite (34b) sowie zumindest ein erstes Zylindervolumen (31) aufweisenden Kolben-Zylindereinheit (30) für jede der Antriebsradanordnungen (3), wobei die Kolben-Zylindereinheit (30) jeweils an der Kolbenseite (34a) oder an der Zylinderseite (34b) mit dem Chassis (1) und an der jeweils anderen Kolben- oder Zylinderseite (34a, 34b) mit der Antriebsradanordnung (3) verbunden ist, und die ersten Zylindervolumina (31) der Kolben-Zylindereinheiten (30) hydraulisch miteinander verbunden sind.

2. Flurförderzeug nach Anspruch 1, **dadurch gekennzeichnet, dass** die Kolben-Zylindereinheiten (30) jeweils derart angeordnet sind, dass eine Wirkrichtung (K) der Kolben-Zylindereinheit (30) in etwa senkrecht zur Ebene (E) verläuft.

3. Flurförderzeug nach einem der Ansprüche 1 oder 2, **dadurch gekennzeichnet, dass** zumindest eine der Kolben-Zylindereinheiten (30) einfachwirkend ausgebildet ist.

4. Flurförderzeug nach einem der voranstehenden Ansprüche, **dadurch gekennzeichnet, dass** zumindest eine der Kolben-Zylindereinheiten (30) ein zweites Zylindervolumen (12b) aufweist.

5. Flurförderzeug nach einem der voranstehenden Ansprüche, **dadurch gekennzeichnet, dass** zumindest zwei Kolben-Zylindereinheiten (30) jeweils ein zweites Zylindervolumen (12b) aufweisen und die zweiten Zylindervolumina (12b) hydraulisch miteinander verbunden sind.

6. Flurförderzeug nach einem der voranstehenden Ansprüche, **dadurch gekennzeichnet, dass** bei der eine Führungsbahn (B) aufweisenden Führungsanordnung (20) die Antriebsradanordnung (3) mit der zweiten Seite (21b) der Koppel (21) verbunden ist.

7. Flurförderzeug nach einem der voranstehenden Ansprüche, **dadurch gekennzeichnet, dass** bei der eine Führungsbahn (B) aufweisenden Führungsanordnung (20) zumindest zwei (S2, S3) der an dem Chassis (1) angeordneten Lagerstellen (S1, S2, S3) und zumindest zwei (S5, S6) der an der Koppel (21) angeordneten Lagerstellen (S4, S5, S6) jeweils auf einer sich etwa senkrecht zur Ebene (E) erstreckenden Geraden (G1, G2) angeordnet sind.

8. Flurförderzeug nach einem der voranstehenden Ansprüche, **dadurch gekennzeichnet, dass** die bei der eine Führungsbahn (B) aufweisenden Führungsanordnung (20) vorgesehenen Lenker (22a, 22b, 22c) stets parallel zueinander angeordnet sind.

9. Flurförderzeug nach einem der voranstehenden Ansprüche, **dadurch gekennzeichnet, dass** jede Antriebsradanordnung (3) einen mit dem jeweils mindestens einen Antriebsrad (4) gekoppelten Drehantriebsmotor (5, 40) umfasst.

10. Flurförderzeug nach Anspruch 9, **dadurch gekennzeichnet, dass** der Drehantriebsmotor (5) mit der Antriebsradanordnung (3) entlang der Linearführung (A) oder der Führungsbahn (B) verlagerbar angeordnet ist.

## Claims

1. Industrial truck (100),
comprising a chassis (1), which defines a plane (E) that extends approximately in parallel with the substrate in an operating position of the industrial truck (100), comprising at least two drive wheel arrangements (3) each of which have at least one drive wheel (4),
comprising at least one guide arrangement (10, 20) for each of the drive wheel arrangements (3), wherein the guide arrangement (10, 20) has either a linear guide (A) having a rail system or profile system for guiding and displacing the drive wheel arrangement (3) or a guide path (B) along which each of the drive wheel arrangements (3) are displaced, comprising a guide direction component (X) which extends approximately perpendicularly to the plane (E), and the guide arrangement (10, 20) is designed in such a way that at least some of the driving, braking and/or steering forces of the relevant drive wheel arrangement (3) are introduced into the chassis (1) via said guide arrangement, wherein the guide arrangement (10) having a linear guide (A) comprises at least one guide element (11), which is connected at two bearing points (12, 13) to the chassis (1) in a guide direction, wherein a first bearing point (12) is designed as a fixed bearing and the other second bearing point (13) is designed as a floating bearing,
wherein the guide arrangement (20) having a guide path (B) comprises at least three connecting rods (22a, 22b, 22c) which each have a first end (23a) and a second end (23b) and a coupling (21) having a first face (21a) and a second face (21b), wherein the connecting rods (22a, 22b, 22c) are each linked with the first end (23a) at a bearing point (S1, S2, S3) arranged on the chassis and with the second end at one of the bearing points (S4, S5, S6) arranged on the coupling (21) such that they extend away from the first face (21a),
and
comprising at least one hydraulically acting piston-cylinder unit (30) for each of the drive wheel arrangements (3), which unit has a piston face (34a) and a cylinder face (34b) and at least one first cylinder volume (31), wherein each piston-cylinder unit (30) is connected on the piston face (34a) or on the cylinder face (34b) to the chassis (1) and on the other piston face or cylinder face (34a, 34b) to the drive wheel arrangement (3), and the first cylinder volumes (31) of the piston-cylinder units (30) are hydraulically connected to one another.

2. Industrial truck according to claim 1, **characterized in that** the piston-cylinder units (30) are each arranged such that an effective direction (K) of the piston-cylinder unit (30) extends approximately perpendicularly to the plane (E).

3. Industrial truck according to any of claims 1 or 2, **characterized in that** at least one of the piston-cylinder units (30) is designed to be single-acting.

4. Industrial truck according to any of the preceding claims,
**characterized in that** at least one of the piston-cylinder units (30) has a second cylinder volume (12b).

5. Industrial truck according to any of the preceding claims,
**characterized in that** at least two piston-cylinder units (30) each have a second cylinder volume (12b) and the second cylinder volumes (12b) are hydraulically connected to one another.

6. Industrial truck according to any of the preceding claims,
**characterized in that** in the guide arrangement (20) having a guide path (B), the drive wheel arrangement (3) is connected to the second face (21b) of the coupling (21).

7. Industrial truck according to any of the preceding claims,
**characterized in that** in the guide arrangement (20) having a guide path (B), at least two (S2, S3) of the bearing points (S1, S2, S3) arranged on the chassis (1) and at least two (S5, S6) of the bearing points (S4, S5, S6) arranged on the coupling (21) are each arranged on a straight line (G1, G2) which extends approximately perpendicularly to the plane (E).

8. Industrial truck according to any of the preceding claims,
**characterized in that** the connecting rods (22a, 22b, 22c) provided for the guide arrangement (20) having a guide path (B) are always arranged in parallel with one another.

9. Industrial truck according to any of the preceding claims,
**characterized in that** each drive wheel arrangement (3) comprises a rotary drive motor (5, 40) coupled to the at least one drive wheel (4) in each case.

10. Industrial truck according to claim 9, **characterized in that** the rotary drive motor (5) is arranged so as to be displaceable with the drive wheel arrangement (3) along the linear guide (A) or the guide path (B).

## Revendications

1. Chariot de manutention (100),
comportant un châssis (1) définissant un plan (E) qui s'étend dans une position de fonctionnement du chariot de manutention (100) à peu près parallèle au sol, comportant au moins deux dispositifs à roues motrices (3) présentant chacun au moins une roue motrice (4),
comportant au moins un dispositif de guidage (10, 20) pour chacun des dispositifs à roues motrices (3), le dispositif de guidage (10, 20) présentant soit un guide linéaire (A) comportant un système à rails ou profilé pour le guidage et le déplacement du dispositif à roue motrice (3) soit un chemin de guidage (B), le long duquel le dispositif à roue motrice (3) peut être respectivement déplacé, comportant une composante directionnelle de guidage (X) qui s'étend à peu près perpendiculairement au plan (E), et le dispositif de guidage (10, 20) est conçu de telle sorte que, par le biais de celui-ci, au moins une partie des forces motrices, de freinage et/ou de direction provenant du dispositif à roue motrice (3) respectif est appliquée dans le châssis (1), le dispositif de guidage (10), qui présente un guide linéaire (A), comprenant au moins un élément de guidage (11) qui est relié au châssis (1) dans la direction de guidage, au niveau de deux points d'appui (12, 13), un premier point d'appui (12) étant conçu comme un palier fixe et l'autre second point d'appui (13) comme un palier libre,
le dispositif de guidage (20), qui présente un chemin de guidage (B), comprenant au moins trois bras (22a, 22b, 22c) présentant respectivement une première extrémité (23a) et une seconde extrémité (23b) ainsi qu'un moyen d'accouplement (21) présentant un premier côté (21a) et un second côté (21b), les bras (22a, 22b, 22c) étant articulés respectivement avec la première extrémité (23a) au niveau d'un point d'appui (S1, S2, S3) agencé sur le châssis et avec la seconde extrémité au niveau d'un point d'appui (S4, S5, S6) agencé sur le moyen d'accouplement (21), de manière à s'étendre depuis le premier côté (21a),
et
comportant au moins une unité piston-cylindre (30) à actionnement hydraulique présentant un côté piston (34a) et un côté cylindre (34b) ainsi qu'au moins un premier volume de cylindre (31) pour chacun des dispositifs à roues motrices (3), l'unité piston-cylindre (30) étant reliée au châssis (1) respectivement au niveau du côté piston (34a) ou au niveau du côté cylindre (34b) et au dispositif à roue motrice (3) au niveau de l'autre côté piston ou cylindre (34a, 34b) respectif, et les premiers volumes de cylindre (31) des unités piston-cylindre (30) étant reliés les uns aux autres de manière hydraulique.

2. Chariot de manutention selon la revendication 1, **caractérisé en ce que** les unités piston-cylindre (30) sont respectivement agencées de manière à ce qu'une direction d'action (K) de l'unité piston-cylindre (30) s'étende à peu près perpendiculairement au plan (E).

3. Chariot de manutention selon l'une des revendications 1 ou 2, **caractérisé en ce qu'**au moins une des unités piston-cylindre (30) est conçue à simple action.

4. Chariot de manutention selon l'une des revendications précédentes, **caractérisé en ce qu'**au moins une des unités piston-cylindre (30) présente un second volume de cylindre (12b).

5. Chariot de manutention selon l'une des revendications précédentes, **caractérisé en ce qu'**au moins deux unités piston-cylindre (30) présentent respectivement un second volume de cylindre (12b) et les seconds volumes de cylindre (12b) sont reliés les uns aux autres de manière hydraulique.

6. Chariot de manutention selon l'une des revendications précédentes, **caractérisé en ce que,** sur le dispositif de guidage (20) présentant un chemin de guidage (B), le dispositif à roue motrice (3) est relié au second côté (21b) du moyen d'accouplement (21).

7. Chariot de manutention selon l'une des revendications précédentes, **caractérisé en ce que,** sur le dispositif de guidage (20) présentant un chemin de guidage (B), au moins deux (S2, S3) des points d'appui (S1, S2, S3) agencés sur le châssis (1) et au moins deux (S5, S6) des points d'appui (S4, S5, S6) agencés sur le moyen d'accouplement (21) sont agencés respectivement sur une droite (G1, G2) s'étendant à peu près perpendiculairement au plan (E).

8. Chariot de manutention selon l'une des revendications précédentes, **caractérisé en ce que** les bras (22a, 22b, 22c) prévus pour le dispositif de guidage (20) présentant un chemin de guidage (B) sont agencés toujours parallèlement les uns par rapport aux autres.

9. Chariot de manutention selon l'une des revendications précédentes, **caractérisé en ce que** chaque dispositif à roue motrice (3) comprend un moteur d'entraînement en rotation (5, 40) accouplé à l'au moins une roue motrice (4) respective.

10. Chariot de manutention selon la revendication 9, **caractérisé en ce que** le moteur d'entraînement en rotation (5) est agencé avec le dispositif à roue motrice (3) de manière à pouvoir être déplacé le long du guide linéaire (A) ou du chemin de guidage (B).
